# EUROPÄISCHE PATENTANMELDUNG

(11) **EP 2 106 826 A1**
(43) Veröffentlichungstag der Anmeldung: **07.10.2009**
(21) Anmeldenummer: 09156118.3
(22) Anmeldetag: 25.03.2009
(51) Int. Cl.: A63B 21/005, F03G 5/00

(54) **Anordnung mit einem Trainingsgerät zum Erzeugen elektrischer Energie**

(30) Priorität: 31.03.2008 DE 202008004354 U
(71) Anmelder: Schwörer Haus KG, 72531 Hohenstein (DE)
(72) Erfinder: Schwörer, Johannes, 72531, Hohenstein-Oberstetten (DE)
(74) Vertreter: Schaumburg, Thoenes, Thurn, Landskron, Eckert

(57) **Zusammenfassung**

Die Anmeldung betrifft eine Anordnung mit mindestens einem Trainingsgerät (10), welches durch manuelles Betätigen mechanische Energie verbraucht, mit einem elektrischen Generator (12), der mit dem Trainingsgerät (10) gekoppelt ist und zumindest einen Teil der mechanischen Energie in elektrische Energie umwandelt. Hierbei ist die elektrische Energie einem vom Trainingsgerät (10) entfernt angeordneten externen Gerät (Einspeisegerät (16), Warmwasseranlage (20), Akkumulator (22) zugeführt, das die aktuell zugeführte Energie in eine Sekundärenergie umwandelt.

## Beschreibung

Die Erfindung betrifft eine Anordnung mit mindestens einem Trainingsgerät, welches durch manuelles Betätigen mechanische Energie verbraucht.

Es gibt zahlreiche Trainingsgeräte, wie z.B. Fahrräder, Laufbänder, Treppengeräte, Trampoline, Crosstrainer oder Langlaufgeräte, die benutzt werden um die körperliche Fitness von sporttreibenden Personen durch mechanische Bewegung zu erhöhen. Die Energie, die durch die mechanische Bewegung erzeugt wird, bleibt jedoch im Allgemeinen ungenutzt.

Es ist Aufgabe der Erfindung, eine Anordnung mit mindestens einem Trainingsgerät zu schaffen, die es ermöglicht, die mechanische Energie, welche beim Betrieb des Traininggeräts von einem Benutzer aufgewendet wird, besser zu nutzen.

Diese Aufgabe wird durch die Kombination der Merkmale des Anspruchs 1 gelöst. Vorteilhafte Weiterbildungen sind in den abhängigen Ansprüchen angegeben.

Gemäß der Erfindung ist ein Trainingsgerät, zum Beispiel Hometrainer, Crosstrainer, Trampolin, Treppengerät, Langlaufgerät, Fahrrad oder dergleichen, mit einem elektrischen Generator ausgestattet. Der Betrieb des elektrischen Generators erfolgt durch Muskelkraft, wobei mechanische Energie in elektrische Energie umgewandelt wird und eine elektrische Leistung von dem Trainingsgerät geliefert wird. Die erzeugte elektrische Leistung wird für den Betrieb von externen elektrischen Geräten genutzt. Dies hat den Vorteil, dass die mechanische Energie nicht intern am Trainingsgerät verbraucht wird, sondern extern zum Betrieb der elektrischen Geräte genutzt werden kann. Insbesondere für sporttreibende Personen, die einen Beitrag für den Umweltschutz leisten wollen, kann es eine Motivation sein, ein derartiges Trainingsgerät zu benutzen.

Bei einer vorteilhaften Weiterbildung der Erfindung ist das externe elektrische Gerät als Heizanlage, insbesondere als Warmwasseranlage mit einer Heizspirale ausgebildet, in der die zugeführte elektrische Energie in eine Wärmeenergie umgewandelt wird. Dies hat den Vorteil, dass die Energiebilanz in der Warmwasseranlage verbessert wird, indem die zugeführte elektrische Energie einen Teil der Gesamtenergie, die zum Beispiel von Heizöl, Gas etc., bereitgestellt wird, ersetzen kann, wodurch Kosten für die Warmwassererwärmung eingespart werden können.

Bei einer anderen vorteilhaften Weiterbildung der Erfindung ist das externe elektrische Gerät als Akkumulator ausgebildet, wobei der Akkumulator die zugeführte elektrische Energie speichert. Der Akkumulator kann in Intervallen aufgeladen werden, beispielsweise über Wochen oder Monate hinweg. Die angesammelte elektrische Energie in dem Akkumulator kann für einen netzunabhängigen Betrieb von elektrischen Geräten zu einem späteren Zeitpunkt verwendet werden.

Auch ist es vorteilhaft, wenn eine Vielzahl von Trainingsgeräten gleichzeitig eingesetzt wird, wobei die elektrischen Generatoren der einzelnen Trainingsgeräte parallel zueinander geschaltet werden. Dadurch wird erreicht, dass eine höhere elektrische Gesamtleistung bereitgestellt wird, welche für das externe elektrische Gerät oder für den Akkumulator genutzt wird.

Bei einer vorteilhaften Weiterbildung der Erfindung dient eine Anzeigevorrichtung zur Darstellung der Messwerte der aktuell produzierten elektrischen Gesamtleistung der miteinander verbundenen Trainingsgeräte. Es ist auch möglich, die elektrische Leistung eines einzelnen Trainingsgeräts bzw. die elektrische Leistung einer Gruppe von Trainingsgeräten mit Hilfe der Anzeigevorrichtung anzuzeigen. Dadurch, dass die produzierte elektrische Leistung den Benutzern der Trainingsgeräte angezeigt werden kann, besteht die Möglichkeit, Turniere und Leistungswettbewerbe zu organisieren, wobei die Benutzer der Trainingsgeräte sich beispielsweise in Gruppen zusammenfinden können, die miteinander konkurrieren. Dies hat den Vorteil, dass die Leistungsmotivation und der "Spaßfaktor" unter den Benutzern der Trainingsgeräte erhöht werden.

Die Erfindung wird nachfolgend anhand von Ausführungsbeispielen in Verbindung mit Zeichnungen erläutert. Darin zeigt:
- Figur 1: eine erste Ausführungsform,
- Figur 2: eine gegenüber der ersten Ausführungsform erweiterte Ausführungsform der Erfindung in einem Fitnessstudio.

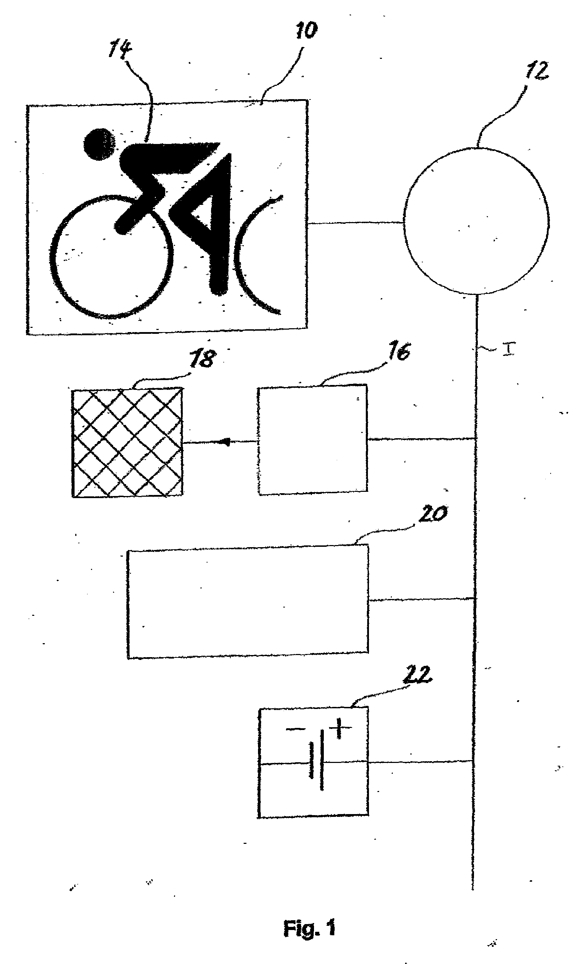

Figur 1 zeigt eine schematische Darstellung einer Anordnung zur Erzeugung elektrischer Energie unter Verwendung eines Trainingsgeräts 10. Das Trainingsgerät 10 ist in diesem Ausführungsbeispiel als Fahrrad ausgebildet, wobei das Trainingsgerät 10 mit einem elektrischen Generator 12 ausgestattet ist. Wenn ein Benutzer 14 in die Pedale des Fahrrads tritt, so erzeugt der mit den Pedalen gekoppelte elektrische Generator 12 einen elektrischen Strom *I*. Dieser elektrische Strom *I* kann auf verschiedene Art und Weise genutzt werden. Beispielsweise kann der elektrische Strom *I* durch ein Einspeisegerät 16 in das elektrische Netz 18 in Form elektrischer Energie eingespeist werden. Alternativ kann der elektrische Strom *I* in Form von elektrischer Energie genutzt werden, indem er einer Heiz- bzw. einer Warmwasseranlage 20 zugeführt wird, in der die elektrische Energie in Wärmeenergie gewandelt wird. Auch kann der erzeugte elektrische Strom *I* für die Aufladung von Akkumulatoren 22 verwendet werden, deren Energie zu einem späteren Zeitpunkt entnommen wird.

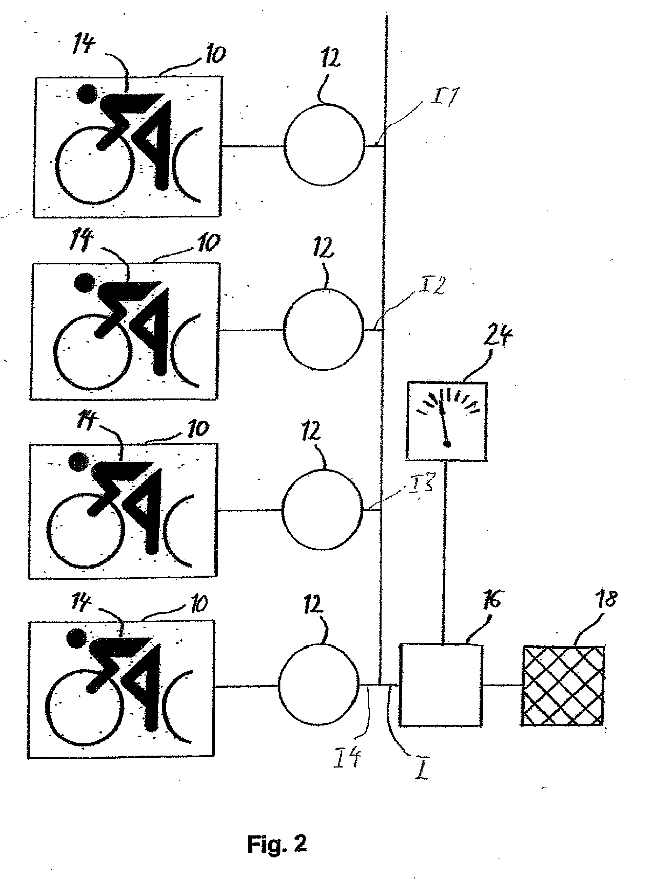

Figur 2 zeigt eine schematische Darstellung einer Einrichtung zur Erzeugung elektrischer Energie in einer Trainingsanlage, insbesondere in einem Fitnessstudio, welche mehrere Trainingsgeräte 10 umfasst. Diese Trainingsgeräte 10 sind mit elektrischen Generatoren 12 ausgestattet, wobei die erzeugten elektrischen parallel gerichteten Teilströme *I1, I2, I3*, und *I4* der elektrischen Generatoren 12 zusammengefasst werden und den Gesamtstrom *I* bilden. Die Fitnessgeräte 10 sind elektrisch miteinander verbunden, und es lässt sich dadurch die gesamte von den angeschlossenen Fitnessgeräten 10 produzierte elektrische Leistung messen. Eine digitale Anzeige 24 dient zur Darstellung der aktuellen elektrischen Gesamtleistung im Fitnessstudio, welche die Benutzer 14 durch körperliche Aktivität an den Fitnessgeräten 10 produzieren. Gleichzeitig wird der elektrische Gesamtstrom *I* durch ein Einspeisegerät 16 direkt in das elektrische Netz 18 überführt. Die erzeugte elektrische Energie kann auch der Warmwasseranlage 20 zugeführt werden oder für die Aufladung des Akkumulators 22 genutzt werden (hier nicht dargestellt).

Es sind weitere Varianten, abweichend von den Figuren 1 und 2, als Ausführungsformen der Erfindung möglich. Beispielsweise kann das Fitnessgerät 10 nicht nur als Fahrrad, sondern auch als Langlaufgerät, Treppengerät oder desgleichen ausgebildet sein. Verschiedene Arten von Fitnessgeräten 10 können auch kombiniert zum Einsatz kommen. In Fitnessstudios können Fitnessgeräte 10 zu Gruppen zusammengeschlossen werden. Je Gruppe erfolgt dann eine Anzeige der Gesamtleistung der jeweiligen Gruppe. Verschiedene untereinander konkurrierende Gruppen können in einem Leistungswettbewerb treten, und es können Turniere veranstaltet werden.

Durch diese Erfindung werden verschiedene wirtschaftliche und ökologische Vorteile erreicht. Beim Betrieb des Trainingsgeräts 10 wird mit Hilfe eines elektrischen Generators 12 die mechanische Energie in einen elektrischen Strom bzw. in eine nutzbare elektrische Energie umgewandelt. Beispielsweise kann der Benutzer 14 des Trainingsgerätes 10 je nach durchschnittlicher körperlicher Aktivität eine elektrische Leistung von etwa 100 W bis 500 W produzieren. Je größer die Anzahl der Benutzer 14 der Fitnessgeräte ist und je größer der körperliche Einsatz der Benutzer 14 ist, desto größer ist die gesamte erzeugte elektrische Leistung im Fitnessstudio. Dieser wirtschaftliche Aspekt könnte eine zusätzliche Motivation für die sporttreibenden Benutzer 14 sein, sich noch stärker zu bewegen. Gleichzeitig könnten durch diese Erfindung auch ökologische Zielgruppen für das Fitnessstudio angesprochen werden.

### Bezugszeichenliste

- 10: Trainingsgerät
- 12: Elektrischer Generator
- 14: Benutzer
- 16: Einspeisegerät
- 18: Elektrisches Netz
- 20: Warmwasseranlage
- 22: Akkumulator
- 24: Digitale Anzeige

## Patentansprüche

1. Anordnung mit mindestens einem Trainingsgerät (10), welches durch manuelles Betätigen mechanische Energie verbraucht,
mit einem elektrischen Generator (12), der mit dem Trainingsgerät (10) gekoppelt ist und zumindest einen Teil der mechanischen Energie in elektrische Energie umwandelt,
wobei die elektrische Energie einem vom Trainingsgerät (10) entfernt angeordneten externen Gerät (Einspeisegerät (16), Warmwasseranlage (20), Akkumulator (22) zugeführt ist, das die aktuell zugeführte Energie in eine Sekundärenergie umwandelt.

2. Anordnung nach Anspruch 1, **dadurch gekennzeichnet, dass** als Trainingsgerät (10) ein Fitnessgerät, vorzugsweise ein Fahrrad, Rudergerät, Crosstrainer, Steppgerät vorgesehen ist.

3. Anordnung nach Anspruch 1 oder 2, **dadurch gekennzeichnet, dass** als elektrisches Gerät eine Warmwasseranlage (20) mit einer Heizspirale vorgesehen ist, die die aktuell zugeführte elektrische Energie in Wärmeenergie umwandelt.

4. Anordnung nach Anspruch 1 oder 2, **dadurch gekennzeichnet, dass** das elektrische Gerät ein Akkumulator (22) ist, der die aktuell zugeführte elektrische Energie speichert.

5. Anordnung nach Anspruch 1 oder 2, **dadurch gekennzeichnet, dass** als elektrisches Gerät ein Einspeisegerät (16) vorgesehen ist, das die aktuell zugeführte Energie in elektrische Sekundärenergie umwandelt, die in das elektrische Netz (18) eingespeist wird.

6. Anordnung nach einem der vorhergehenden Ansprüche, **dadurch gekennzeichnet, dass** eine Anzeigevorrichtung (24) vorgesehen ist, die die aktuell erzeugte elektrische Energie anzeigt.

7. Anordnung nach einem der vorhergehenden Ansprüche, **dadurch gekennzeichnet, dass** eine Vielzahl von Trainingsgeräten (10) vorgesehen ist, dass die von den Trainingsgeräten (10) erzeugte elektrische Energie zusammenfasst wird und einem von den Trainingsgeräten (10) entfernt angeordneten elektrischen Gerät (16, 20, oder 22) zugeführt ist.

8. Anordnung nach Anspruch 7, **dadurch gekennzeichnet, dass** eine Anzeigevorrichtung (24) vorgesehen ist, die die aktuell erzeugte elektrische Gesamtleistung anzeigt.

9. Anordnung nach Anspruch 7, **dadurch gekennzeichnet, dass** die Trainingsgeräte (10) in Gruppen unterteilt werden, wobei eine Anzeigevorrichtung (24) die Gesamtleistung der jeweiligen Gruppe anzeigt.

## Geänderte Patentansprüche

### Geänderte Patentansprüche gemäss Regel 137(2) EPÜ.

**1.** Anordnung mit mindestens einem Trainingsgerät (10), welches durch manuelles Betätigen mechanische Energie verbraucht,
mit einem elektrischen Generator (12), der mit dem Trainingsgerät (10) gekoppelt ist und zumindest einen Teil der mechanischen Energie in elektrische Energie umwandelt,
wobei die elektrische Energie einem vom Trainingsgerät (10) entfernt angeordneten externen zugeführt ist, das die aktuell zugeführte Energie in eine Sekundärenergie umwandelt, **dadurch gekennzeichnet, dass**
als externes Gerät eine Warmwasseranlage (20) mit einer Heizspirale vorgesehen ist, die die aktuell zugeführte elektrische Energie in Wärmeenergie umwandelt.

**2.** Anordnung nach Anspruch 1, **dadurch gekennzeichnet, dass** als Trainingsgerät (10) ein Fitnessgerät, vorzugsweise ein Fahrrad, Rudergerät, Crosstrainer, Steppgerät vorgesehen ist.

**3.** Anordnung nach Anspruch 1 oder 2, **dadurch gekennzeichnet, dass** das elektrische Gerät ein Akkumulator (22) ist, der die aktuell zugeführte elektrische Energie speichert.

**4.** Anordnung nach Anspruch 1 oder 2, **dadurch gekennzeichnet, dass** als elektrisches Gerät ein Einspeisegerät (16) vorgesehen ist, das die aktuell zugeführte Energie in elektrische Sekundärenergie umwandelt, die in das elektrische Netz (18) eingespeist wird.

**5.** Anordnung nach einem der vorhergehenden Ansprüche, **dadurch gekennzeichnet, dass** eine Anzeigevorrichtung (24) vorgesehen ist, die die aktuell erzeugte elektrische Energie anzeigt.

**6.** Anordnung nach einem der vorhergehenden Ansprüche, **dadurch gekennzeichnet, dass** eine Vielzahl von Trainingsgeräten (10) vorgesehen ist, dass die von den Trainingsgeräten (10) erzeugte elektrische Energie zusammenfasst wird und einem von den Trainingsgeräten (10) entfernt angeordneten elektrischen Gerät (16, 20, oder 22) zugeführt ist.

**7.** Anordnung nach Anspruch 6, **dadurch gekennzeichnet, dass** eine Anzeigevorrichtung (24) vorgesehen ist, die die aktuell erzeugte elektrische Gesamtleistung anzeigt.

**8.** Anordnung nach Anspruch 6, **dadurch gekennzeichnet, dass** die Trainingsgeräte (10) in Gruppen unterteilt werden, wobei eine Anzeigevorrichtung (24) die Gesamtleistung der jeweiligen Gruppe anzeigt.
